# EUROPÄISCHE PATENTSCHRIFT

(11) **EP 2 380 336 B1**
(45) Veröffentlichungstag und Bekanntmachung des Hinweises auf die Patenterteilung: **28.03.2018**
(21) Anmeldenummer: 09795408.5
(22) Anmeldetag: 16.12.2009
(51) Int. Cl.: H04M 1/725

(54) **VERFAHREN UND VORRICHTUNG ZUR ÜBERTRAGUNG VON DATEIEN**
PROCEDURE AND DEVICE FOR FILE TRANSFER
PROCÉDÉ ET DISPOSITIF POUR LE TRANSFERT DE FICHIERS

(30) Priorität: 21.01.2009 DE 102009005599
(43) Veröffentlichungstag der Anmeldung: 26.10.2011
(73) Patentinhaber: Deutsche Telekom AG, 53113 Bonn (DE)
(72) Erfinder: RESPONDEK, Peter, A-8511 Greisdorf Steiermark (AT); GRAU, Lars, 10115 Berlin (DE)
(74) Vertreter: Schrooten, Rolf
(86) Internationale Anmeldenummer: PCT/EP2009/067303
(87) Internationale Veröffentlichungsnummer: WO 2010/083923

(56) Entgegenhaltungen:
- WO-A1-2008/086319
- US-A1- 2006 101 122
- US-A1- 2008 094 369
- Microsoft: "Windows Mobile 6 Frequently Asked Questions" 12. Februar 2007 (2007-02-12), XP002570071 Gefunden im Internet: URL:http://download.microsoft.com/download /c/b/d/cbdc18d1-1a01-4736-a557-08474ec7344 3/WindowsMobile6_FAQ.pdf> [gefunden am 2010-02-22]
- Ted M. Montgomery: "HTML Tutorial: Hyperlinks" 31. Juli 2008 (2008-07-31), XP002570072 Gefunden im Internet: URL:http://web.archive.org/web/20080731191 323/http://www.tedmontgomery.com/tutorial/ hyprlnks.html> [gefunden am 2010-02-22]
- Anonymous: "Windows Mobile" Wikipedia, The Free Encyclopedia 24. Juni 2008 (2008-06-24), XP002570073 Gefunden im Internet: URL:http://en.wikipedia.org/w/index.php?ti tle=Windows_Mobile&oldid=221454514> [gefunden am 2010-02-22]
- Charlie Kindel et al.: "Inserting objects into HTML", The World Wide Web Consortium: http://www.w3.org/ , 18 February 1997 (1997-02-18), Retrieved from the Internet: URL:https://www.w3.org/TR/WD-object-970218 [retrieved on 2016-11-21]

## Beschreibung

Die vorliegende Erfindung betrifft ein Verfahren nach Anspruch 1 sowie ein Mobiltelefon nach Anspruch 6. Bei diesem Verfahren zur Datenübertragung von mindestens einem durch zumindest eine Datei gebildeten Objekt über eine drahtlose und/oder drahtgebundene Übertragungsstrecke von einem Sender an mindestens einen Empfänger, die jeweils mit einer graphischen Anzeigeeinrichtung, etwa einem Display ausgestattet sind, wird das mindestens eine zu übertragende Objekt oder jeweils ein Symbol für jedes zu übertragende Objekt vom Absender zunächst in einem Objektbereich der Anzeigeeinrichtung des Senders bezüglich mindestens einer graphischen Eigenschaft frei wählbar angeordnet. Dieses frei wählbare Anordnen des mindestens einen Objekts bzw. der Symbole für die zu übertragenden Objekte geschieht dadurch, dass seine/ihre graphische Anordnung zumindest hinsichtlich seiner/ihrer Positionierung(en) in dem Objektbereich der Anzeigeeinrichtung in allen Richtungen frei verschoben werden können. Danach wird der Datenübertragungsvorgang an den mindestens einen gewünschten Empfänger ausgeführt, wobei zusätzlich zu dem mindestens einen Objekt auch Daten mit Informationen über die zuvor hierzu angelegten Anordnung des mindestens einen Objekts bzw. der entsprechenden Symbole in dem Objektbereich übertragen werden, wobei schließlich das mindestens eine Objekt oder das Symbol für jedes Objekt in einem Objektbereich auf der Anzeigeeinrichtung des Empfängers in der Anordnung angezeigt wird, die von dem Absender vor der Datenübertragung auf dem Sendegerät angelegt wurde.
Insbesondere können die zu übertragenden Objekte dabei von einem als Sender genutzten Endgerät, vorzugsweise einem Mobiltelefon, über ein drahtloses Kommunikationsnetz an ein oder an mehrere als Empfänger genutzte Endgeräte, vorzugsweise Mobiltelefone, gesendet werden. Ebenso kann das Verfahren aber bei der drahtgebundenen Versendung von Objekten, beispielsweise im Rahmen von E-Mail-Anwendungen zum Einsatz kommen, wobei stationäre oder tragbare Computer als Sender und/oder als Empfänger dienen.

Bei den zu übertragenden Objekten kann es sich um beliebige Dateien handeln, wobei insbesondere Bilddateien sowie Video- oder Audiodateien in Betracht kommen. Das Display, auf dem sowohl beim Sender als auch beim Empfänger Informationen zu den Objekten anzeigbar sind, kann vorzugsweise unmittelbar in das als Sender bzw. Empfänger genutzt Endgerät integriert sein, oder als separate Anzeigevorrichtung, beispielsweise in der Form eines Fernsehbildschirms oder Computer-Monitors mit dem jeweiligen Endgerät verbunden sein.

Derartige Verfahren zum Versenden von Dateien sind bekannt. Üblicherweise werden dabei die zu übertragenden Objekte als Anhänge an eine elektronische Nachricht ("e-mail") angefügt, die dann als Trägernachricht zusammen mit den Anhängen an die ausgewählten Empfänger versendet wird. Auch ist es möglich, direkt nur die Objekte zu senden, beispielsweise als Mediendateien ("MMS").

Aus der US 2006/0101122 A1 ist ein Verfahren zur Versendung von E-Mails im Multipart-Format bekannt. Dabei können Bilder einer E-Mail angehängt oder in den Haupttext einer E-Mail eingefügt werden.

Das Microsoft-Dokument XP-002570071 "Windows Mobile 6 Frequently Asked Questions" vom 12.02.2007 beschreibt die Gestaltung, das Versenden und den Empfang von E-Mails im HTML Format.

In der Veröffentlichung "Inserting objects into HTML", The World Wide Web Consortium: http://www.w3.org/ von Charlie Kindel et al. vom 18.02.1997 werden in dem Kapitel "Defining Overlapping Regions" HTML-Kommandos offenbart, mit denen mehrere Objekte in einer sich teilweise überdeckenden Anordnung dargestellt werden können.

Insbesondere bei der Versendung der Objekte als Anhang an eine Nachricht hat der Absender keine oder allenfalls sehr geringe Möglichkeiten zur Einflussnahme auf die Art und Weise, wie sich der Anhang dieser Objekte gestaltet. So besteht bei der Versendung einer e-mail mit mehreren als Anhänge angefügten Objekten lediglich die Möglichkeit, beim Anfügen die Reihenfolge dieser Anhänge zu steuern.

Aufgabe der vorliegenden Erfindung ist es daher, ein Verfahren der eingangs genannten Art bereitzustellen, das auf einfache Weise zusätzliche Gestaltungsmöglichkeiten bei der Übertragung von Dateien bietet.

Diese Aufgabe wird erfindungsgemäß durch ein Verfahren nach Anspruch 1 gelöst. Vorteilhafte Ausgestaltungen und Weiterbildungen der Erfindung ergeben sich aus den abhängigen Ansprüchen.

Wesentlich bei der erfindungsgemäßen Lösung ist es, dass mehrere Objekte und/oder Symbole für zu übertragende Objekte derart in dem Objektbereich der Anzeigeeinrichtung des Senders angeordnet werden können, dass sie sich zumindest teilweise überdecken, und dass sie hinsichtlich ihrer Ausrichtung im Objektbereich in beliebige Orientierungen gedreht werden können.

Auf diese Weise ergeben sich nicht nur besonders vielfältige Variationsmöglichkeiten bei der graphischen Anordnung, sondern es können beispielsweise auch Objekte versandt werden, die unter anderen Objekten versteckt sind und so nicht direkt vom Empfänger erkannt werden können. Erst nach einer entsprechenden Bearbeitung der empfangenen Anordnung des Objektbereichs werden diese versteckten Dateien dann sichtbar, so dass empfängerseitig eine gewisse Spannung beim Dateiversand erzeugt werden kann, was diesen Dienst noch attraktiver macht.

Auch hierbei gilt, dass der Objektbereich so gesendet wird, wie er vom Absender gestaltet wurde, und anschließend bei dem oder den ausgewählten Empfängern unverändert in dieser Anordnung angezeigt wird, wobei lediglich eine Anpassung der Größe des gesamten Objektbereichs an die Größe des jeweiligen Empfangsbereichs möglich ist.

Aus dieser vom Absender zuvor geschaffenen Anordnung heraus kann der Empfänger durch gezieltes Auswählen, insbesondere durch Anklicken, bestimmte Aktionen mit einem oder mehreren ausgewählten Objekten ausführen. So kann er beispielsweise einzelne Objekte öffnen, sie in bestimmte Verzeichnisse oder Ordner verschieben oder kopieren, oder ausgewählte Objekte an weitere Empfänger weiterleiten. Dabei kann entweder die zuvor empfangene Anordnung der Objekte beibehalten oder eine veränderte Anordnung geschaffen und versendet werden. Insbesondere können dabei auch einzelne oder mehrere Objekte aus der Anordnung entfernt und/oder hinzugefügt werden.

Sofern es sich bei einem Objekt beispielsweise um ein Bild oder eine Graphik handelt, kann das Objekt selber in einer vom Absender gewünschten Art und Weise angeordnet werden, wohingegen insbesondere bei einer Audiodatei lediglich ein bestimmtes Symbol für die eigentliche Datei graphisch in dem Objektbereich angeordnet wird.

Ein Hauptvorteil liegt dabei darin, dass der Absender die Möglichkeit zu einer individuellen graphischen Anordnung der Objekte hat, die er versenden möchte, ohne dabei den Inhalt der Objekte zu modifizieren. Auf diese Art und Weise können zusätzlich zum Inhalt der Objekte und zusätzlich zum Inhalt einer gegebenenfalls benutzten Trägernachricht bestimmte Informationen oder Emotionen übermittelt werden. Insbesondere kann der Absender dabei der Datenübertragung eine zusätzliche persönliche Note aufdrücken, so dass das erfindungsgemäße Verfahren die Attraktivität, insbesondere den "funfactor" beim Versenden von Dateien deutlich erhöht.

So ist beispielsweise auch die Übersendung eines auf dem Kopf stehenden Bild-Anhangs möglich, wobei jedoch das eigentliche Bild bei einer Aktivierung oder beim Öffnen lagerichtig angezeigt wird.

Das erfindungsgemäße Verfahren ermöglicht bei der Gestaltung der graphischen Anordnung der zu übertragenden Objekte eine intuitive Bedienung und ist insgesamt einfach durchzuführen.

Gemäß einer beispielhaften Ausgestaltung kann auch vorgesehen sein, dass die bei der Gestaltung des Objektbereichs frei wählbaren graphischen Eigenschaften der zu übertragenden Objekte oder der jeweiligen Symbole die jeweils graphisch dargestellte Größe umfassen. Auf diese Weise können beispielsweise mehreren angehängten Dateien durch unterschiedliche Größen verschiedene Bedeutungen oder Gewichtungen zugeordnet werden.

Auch kann gemäß einer weiteren beispielhaften Ausgestaltung vorgesehen sein, dass eine Spiegelung der zu übertragenden Objekte oder der jeweiligen Symbole zu den frei wählbaren graphischen Eigenschaften gehört, so dass Objekte oder entsprechende Symbole im Objektbereich zunächst seitenverkehrt darstellbar sind.

Gemäß einer weiteren beispielhaften Ausgestaltung kann auch vorgesehen sein, dass die bei der Gestaltung des Objektbereichs frei wählbaren graphischen Eigenschaften der zu übertragenden Objekte oder der entsprechenden Symbole die jeweils graphisch dargestellte Formgebung umfassen.

Vorzugsweise bestehen die vorgenannten Möglichkeiten zur Variation der graphischen Eigenschaften der zu übertragenden Objekte bzw. der entsprechenden Symbole nebeneinander und können unabhängig voneinander ausgeführt werden.

Die zu übertragenden Objekte können durch beliebige Dateien gebildet werden. Vorzugsweise wird das Verfahren beim Versand von Bilddateien, Videodateien, Audiodateien, Textdateien oder Graphikdateien angewendet.

Weiterhin besteht die Möglichkeit, das bei dem erfindungsgemäßen Verfahren ein Objekt mehrere einzelne Dateien umfasst, die vorzugsweise in einem Ordner zusammengefasst sind. Für den Ordner kann dann ein entsprechendes Symbol in dem Objektbereich angeordnet werden.

Besonders vielfältige und zusätzliche Variationsmöglichkeiten können ferner dadurch erreicht werden, dass der graphische Hintergrund des Objektbereichs, in dem die zu übertragenden Objekte und/oder Symbole frei wählbar angeordnet werden, frei gestaltet oder aus einer Sammlung gespeicherter Hintergrundbilder ausgewählt werden kann, wobei Informationen zu dem so gestaltete Hintergrund zusammen mit den Objekten und den Informationen zu der jeweiligen Anordnung in dem Objektbereich übertagen werden.

Vorzugsweise kann das erfindungsgemäße Verfahren sowohl senderseitig als auch empfängerseitig von einer tragbaren Kommunikationsvorrichtung, insbesondere von ein Mobiltelefon ausgeführt werden.

Insofern betrifft die vorliegende Erfindung auch ein Mobiltelefon nach Anspruch 6, das zur Durchführung des vorangehend beschriebenen Verfahrens geeignet ist. Es umfasst dazu Mittel zur frei wählbaren Anordnung mindestens einer graphischen Eigenschaft des mindestens einen zu übertragenden Objekts oder des jeweiligen Symbols. Diese Mittel können insbesondere durch Tasten oder durch einen berührungssensitiven Bildschirm (Touchscreen) gebildet sein.

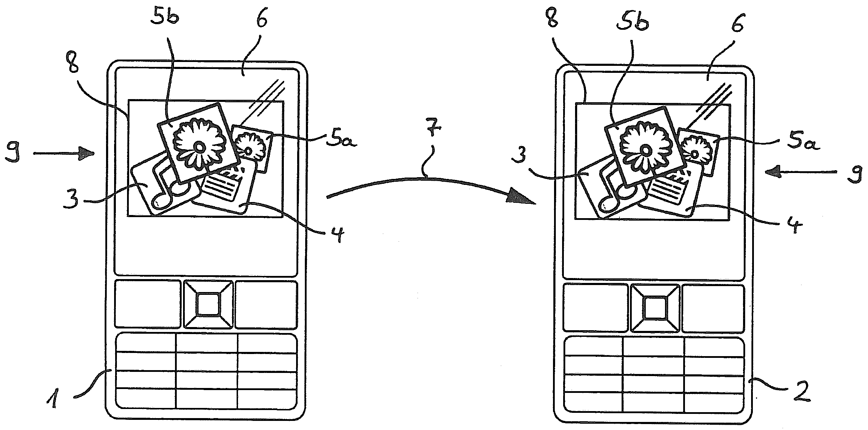

Weitere Vorteile und Merkmale der Erfindung ergeben sich aus der nachfolgenden Beschreibung und dem in der Zeichnung dargestellten Ausführungsbeispiel.

In der einzigen Figur sind zwei Mobiltelefone 1 und 2 dargestellt, auf denen das erfindungsgemäße Verfahren ausgeführt wird. Dabei werden verschiedene Objekte 3 bis 5b von dem als Sender dienenden ersten Mobiltelefon 1 an das als Empfänger dienende Mobiltelefon 2 gesendet. Beide Mobiltelefone 1 und 2 haben jeweils ein großes Display 6, auf denen unter anderem auch die Objekte 3 bis 5b angezeigt werden können.

Im einzelnen umfassen die hier zu übertragenden Objekte eine Musikdatei 3, eine Videodatei 4 sowie zwei Bilddateien 5a und 5b. Diese vier Objekte 3 bis 5b werden vor der durch den Pfeil 7 dargestellten Datenübertagung in einem Objektbereich 8, der sich innerhalb des Displays 6 des sendenden Mobiltelefons 1 befindet, in eine vom Absender gewünschten Anordnung 9 gebracht. In dieser Anordnung 9 ist nur das Objekt 5b vollständig zu sehen, wohingegen die anderen Objekte 3 bis 5a jeweils zum Teil von anderen Objekten verdeckt sind, so dass sich insgesamt der optische Eindruck eines Stapels von Bildern ergibt. Dabei sind alle vier Objekte 3 bis 5b hinsichtlich ihrer Position, ihrer Ausrichtung und ihrer Größe vom Absender frei angeordnet worden, um die von ihm gewünschte Anordnung 9 zu erreichen.

Bei der Datenübertragung 7 werden zusätzlich zu den vier Objekten 3 bis 5b und einer gegebenenfalls verwendeten Trägernachricht auch Daten mit Informationen über die so geschaffene Anordnung 9 dieser vier Objekte an das Mobiltelefon 2 übertragen, so dass nach dem Empfang der Daten die vier Objekte 3 bis 5b in dem Objektbereich 8 auf dem Display 6 des Mobiltelefons 2 in exakt der gleichen Anordnung 9 angezeigt werden. Der Empfänger hat daher bei den empfangenen Dateien ebenfalls den optischen Eindruck eines Stapels von Bildern, den der Absender zuvor individuell erzeugt hat.

## Patentansprüche

1. Verfahren zur Datenübertragung mindestens eines durch zumindest eine Datei gebildeten Objektes (3, 4, 5a, 5b) über eine drahtlose und/oder drahtgebundene Übertragungsstrecke von einem Sender (1) mit einer graphischen Anzeigeeinrichtung (6) an mindestens einen Empfänger (2) mit einer graphischen Anzeigeeinrichtung (6), umfassend die folgenden Verfahrensschritte:
- das mindestens eine zu übertragende Objekt (3, 4, 5a, 5b) oder jeweils ein Symbol für jedes zu übertragende Objekt (3, 4, 5a, 5b) wird in einem Objektbereich (8) der Anzeigeeinrichtung (6) des Senders (1) bezüglich mindestens einer graphischen Eigenschaft frei wählbar angeordnet, indem seine/ihre graphische Anordnung zumindest hinsichtlich seiner/ihrer Positionierung/Positionierungen im Objektbereich (8) der Anzeigeeinrichtung (6) in allen Richtungen frei verschiebbar ist/sind,
- der Datenübertragungsvorgang (7) an den mindestens einen Empfänger (2) wird derart ausgeführt, dass zusätzlich zu dem mindestens einen Objekt (3, 4, 5a, 5b) auch Informationen zu der Anordnung (9) in dem Objektbereich (8) übertragen werden,
- das mindestens eine Objekt (3, 4, 5a, 5b) oder das Symbol für jedes Objekt (3, 4, 5a, 5b) wird in einem Objektbereich (8) auf der Anzeigeeinrichtung (6) des Empfängers (2) in der Anordnung (9) angezeigt, die vor der Datenübertragung (7) auf dem Sendegerät (1) angelegt wurde,
**dadurch gekennzeichnet, dass** mehrere Objekte (3, 4, 5a, 5b) und/oder Symbole für zu übertragende Objekte (3, 4, 5a, 5b) gleichzeitig frei wählbar derart in dem Objektbereich (8) der Anzeigeeinrichtung (6) des Senders (1) angeordnet werden, dass sie sich zumindest teilweise überdecken,
und dass die Objekte (3, 4, 5a, 5b) und/oder die Symbole für zu übertragende Objekte (3, 4, 5a, 5b) hinsichtlich ihrer Ausrichtung im Objektbereich (8) in beliebige Orientierungen drehbar sind.

2. Verfahren nach Anspruch 1, **dadurch gekennzeichnet, dass** ein Objekt durch eine Bilddatei (5a, 5b) oder Videodatei (4) oder Audiodatei (3) oder Textdatei oder Graphikdatei gebildet ist.

3. Verfahren nach einem der vorherigen Ansprüche, **dadurch gekennzeichnet, dass** ein Objekt (3, 4, 5a, 5b) mehrere Dateien umfasst, die insbesondere in einem Ordner zusammengefasst sind.

4. Verfahren nach einem der vorherigen Ansprüche, **dadurch gekennzeichnet, dass** der graphische Hintergrund des Objektbereichs (8), in dem die zu übertragenden Objekte (3, 4, 5a, 5b) oder die jeweiligen Symbole für jedes zu übertragende Objekt (3, 4, 5a, 5b) frei wählbar angeordnet werden, frei gestaltbar oder aus einer Sammlung gespeicherter Hintergrundbilder auswählbar ist, und dass der Hintergrund zusammen mit den Objekten (3, 4, 5a, 5b) und den Informationen zu der Anordnung (9) in dem Objektbereich (8) an den Empfänger (2) übertagen wird.

5. Verfahren nach einem der vorherigen Ansprüche, **dadurch gekennzeichnet, dass** der Sendevorgang (7) von einer tragbaren Kommunikationsvorrichtung, insbesondere von ein Mobiltelefon (1) ausgeführt wird.

6. Mobiltelefon (1), umfassend Mittel zur Durchführung des Verfahrens nach einem der Ansprüche 1 bis 5, wobei das Mobiltelefon Mittel zur frei wählbaren Anordnung (9) mindestens einer graphischen Eigenschaft der zu übertragenden Objekte (3, 4, 5a, 5b) oder der jeweiligen Symbole umfasst,
**dadurch gekennzeichnet,**
**dass** die Mittel zu einer in beliebige Orientierungen drehbaren und sich zumindest teilweise überdeckenden Anordnung (9) mehrerer Objekte (3, 4, 5a, 5b) und/oder Symbole ausgebildet sind.

## Claims

1. A method for data transmission of at least one object (3, 4, 5a, 5b) formed of at least one file via a wireless and/or wired transmission route from a transmitter (1) with a graphic display device (6) to at least one receiver (2) with a graphic display device (6) comprising the following method steps:
- the at least one object (3, 4, 5a, 5b) to be transmitted, or respectively a symbol for each object (3, 4, 5a, 5b) to be transmitted, is arranged in an object area (8) of the transmitter's (1) display device (6), in a freely selectable manner in relation to at least one graphic characteristic, in that its/their graphic arrangement, at least in relation to its/their placing/placings in the object area (8) of the display device (6), is/are freely adjustable in all directions,
- the data transmission process (7) to the at least one receiver (2) is carried out in such a way that, in addition to the at least one object (3, 4, 5a, 5b), information about the arrangement (9) in the object area (8) is also transmitted,
- the at least one object (3, 4, 5a, 5b), or the symbol for each object (3, 4, 5a, 5b), is displayed in an object area (8) on the receiver's (2) display device (6) in the arrangement (9) which was created on the transmitting device (1) prior to the data transmission (7),
**characterised in that** a number of objects (3, 4, 5a, 5b) and/or symbols for objects (3, 4, 5a, 5b) to be transmitted can be simultaneously arranged in the object area (8) of the transmitter's (1) display device (6) in a freely selectable manner such that they at least partially overlap each other,
and that, in relation to their orientation in the object area (8), the object (3, 4, 5a, 5b) and/or the symbols for objects (3, 4, 5a, 5b) to be transmitted are rotatable in any direction.

2. The method according to claim 1, **characterised in that** an object is formed by an image file (5a, 5b), or video file (4), or audio file (3), or text file or graphic file.

3. The method according to one of the preceding claims, **characterised in that** an object (3, 4, 5a, 5b) comprises a number of files which are in particular grouped together into a folder.

4. The method according to one of the preceding claims, **characterised in that** the graphic background of the object area (8), in which the object (3, 4, 5a, 5b) or the respective symbols for each object (3, 4, 5a, 5b) to be transmitted are arranged in a freely selectable manner, is freely designable, or may be selected from a collection of saved background images, and that the background, together with the objects (3, 4, 5a, 5b) and the information about the arrangement (9) in the object area (8), are transmitted to the receiver (2).

5. The method according to one of the preceding claims, **characterised in that** the transmission process (7) is carried out by a portable communication device, in particular by a mobile phone (1).

6. A mobile phone (1) comprising means for carrying out the method according to one of claims 1 to 5, wherein the mobile phone comprises means for a freely selectable arrangement (9) of at least one graphic characteristic of the objects (3, 4, 5a, 5b) to be transmitted or their respective symbols, **characterised in that**
the means are designed to form an arrangement (9) of a number of objects (3, 4, 5a, 5b) and/or symbols which can be rotated in arbitrary orientations and which overlap at least partially.

## Revendications

1. Procédé destine à transférer des données d'au moins un objet (3, 4, 5a, 5b) formé par au moins un fichier par l'intermédiaire d'un trajet de transmission sans fil et/ou filaire, d'un émetteur (1) doté d'un système d'affichage (6) graphique vers au moins un récepteur (2) doté d'un système d'affichage (6) graphique, comprenant les étapes de procédé suivantes :
- l'au moins un objet (3, 4, 5a, 5b) à transférer ou chaque fois un symbole pour chaque objet (3, 4, 5a, 5b) à transférer est configuré de manière librement choisie dans une zone d'objet (8) du système d'affichage (6) de l'émetteur (1), en rapport à au moins une propriété graphique, en ce que son/leur configuration graphique soit librement déplaçable dans toutes les directions, pour le moins au niveau de sa/leur positionnement/positionnements dans la zone d'objet (8) du système d'affichage (6),
- le processus de transfert de données (7) sur l'au moins un récepteur (2) est réalisé de telle sorte qu'en supplément de l'au moins un objet (3, 4, 5a, 5b), également des informations concernant la configuration (9) dans la zone d'objet (8) soient transférées,
- l'au moins un objet (3, 4, 5a, 5b) ou le symbole pour chaque objet (3, 4, 5a, 5b) est affiché dans une zone d'objet (8) sur le système d'affichage (6) du récepteur (2) dans la configuration (9) qui a été créée avant le transfert de données (7) sur l'appareil émetteur (1),
**caractérisé en ce que** plusieurs objets (3, 4, 5a, 5b) et/ou symboles pour des objets (3, 4, 5a, 5b) à transférer sont configurés de manière librement choisie simultanément dans la zone d'objet (8) du système d'affichage (6) de l'émetteur(1) de telle sorte, qu'ils se recouvrent au moins partiellement,
et **en ce que** les objets (3, 4, 5a, 5b) et/ou les symboles pour des objets (3, 4, 5a, 5b) à transférer sont rotatifs dans des orientations quelconques, en ce qui concerne leur alignement dans la zone d'objet (8).

2. Procédé selon la revendication 1, **caractérisé en ce qu'**un objet est formé par un fichier image (5a, 5b) ou par un fichier vidéo (4) ou par un fichier audio (3) ou par un fichier texte ou par un fichier graphique.

3. Procédé selon l'une quelconque des revendications précédentes, **caractérisé en ce qu'**un objet (3, 4, 5a, 5b) comprend plusieurs fichiers, qui sont rassemblés notamment dans un répertoire.

4. Procédé selon l'une quelconque des revendications précédentes, **caractérisé en ce que** l'arrière-plan graphique de la zone d'objet (8), dans laquelle les objets (3,4, 5a, 5b) à transférer ou les symboles respectifs pour chaque objet (3, 4, 5a, 5b) à transférer sont configurés de manière librement choisie est sélectionnable selon une conception libre ou à partir d'une collection d'images d'arrière-plan mémorisées, et qu'ensemble avec les objets (3, 4, 5a, 5b) et les informations de configuration (9), l'arrière-plan est transféré au récepteur (2) dans la zone d'objet (8).

5. Procédé selon l'une quelconque des revendications précédentes, **caractérisé en ce que** le processus d'émission (7) est réalisé par un dispositif de communication portable, notamment par un téléphone mobile (1)

6. Téléphone mobile (1), comprenant des moyens destinés à réaliser le procédé selon l'une quelconque des revendications 1 à 5, le téléphone mobile comprenant des moyens pour la configuration (9) librement choisie d'au moins une propriété graphique des objets (3, 4, 5a, 5b) à transférer ou des symboles respectifs,
**caractérisé en ce que**
les moyens sont conçus pour une configuration (9) rotative dans des orientations quelconques et se recouvrant au moins partiellement de plusieurs objets (3, 4, 5a, 5b) et/ou symboles.
